# EUROPÄISCHE PATENTSCHRIFT

(11) **EP 3 801 980 B1**
(45) Veröffentlichungstag und Bekanntmachung des Hinweises auf die Patenterteilung: **24.07.2024**
(21) Anmeldenummer: 19723397.6
(22) Anmeldetag: 09.05.2019
(51) Int. Cl.: B25J 9/00, B25J 11/00, B25J 19/02, B24B 27/00, B24B 49/12, B24B 9/04, B23C 3/00, B23C 3/12

(54) **VERFAHREN ZUM FACETTIEREN**
FACETING METHOD
PROCÉDÉ DE FACETTAGE

(30) Priorität: 01.06.2018 DE 102018113122
(43) Veröffentlichungstag der Anmeldung: 14.04.2021
(73) Patentinhaber: Mack Rides IP GmbH & Co. KG, 79183 Waldkirch (DE)
(72) Erfinder: SCHILL, Hubert, 79215 Elzach (DE); BURGER, Günter, 79183 Waldkirch (DE)
(74) Vertreter: Westphal, Mussgnug & Partner Patentanwälte mbB
(86) Internationale Anmeldenummer: PCT/EP2019/061985
(87) Internationale Veröffentlichungsnummer: WO 2019/228781

(56) Entgegenhaltungen:
- EP-A2- 2 722 138
- WO-A1-95/00287
- DE-A1- 102014 108 956
- JP-A- H08 141 881

## Beschreibung

Die vorliegende Erfindung betrifft ein Verfahren zum Facettieren mindestens einer Werkstückkante auf mindestens einer Werkstückseite wenigstens eines Werkstücks mit den Merkmalen des Anspruchs 1.

Facetten sind aus dem Stand der Technik in unterschiedlichen Ausgestaltungen vorbekannt und werden typischerweise als Fase oder Kantenverrundung an Werkstückkanten eines plattenförmigen Werkstücks, beispielsweise einem Blech, angearbeitet oder angeformt um scharfe Kanten bzw. Grate zu vermeiden. Insbesondere bei Blechbauteilen, die nach dem Laserschneiden, Stanzen oder Nibbeln beschichtet werden sollen, besteht der Bedarf, die Werkstückkante mit einer Facette zu versehen, um zu verhindern, dass die Beschichtung im Bereich der Werkstückkante inhomogen wird. Eine inhomogene Beschichtung im Bereich der Werkstückkante führt oftmals zu einem Abplatzen der Beschichtung und somit zu einer Zerstörung des durch die Beschichtung aufgetragenen Korrosionsschutzes. Im Stand der Technik werden lasergeschnittene, gestanzte oder genibbelte plattenförmige Werkstücke oftmals von Hand mittels einer entsprechenden Tellerbürste oder ähnlichem entgratet. Dabei hat es sich als nachteilig erwiesen, dass das manuelle Entgraten zu einer inhomogenen Facette an dem Werkstück führt und einen hohen personellen Aufwand erfordert. Insbesondere bei der Herstellung von Werkstücken in Kleinserien oder als Einzelteil ist eine CNC-gesteuerte Facette aufgrund des Programmieraufwandes wirtschaftlich ungünstig.

DE 10 2014 108 956 A1 (bildet die Basis für den Oberbegriff von Anspruch 1), JP H08 141 881 A, WO 95 00287 A1 und EP 2 722 138 A2 bilden weiteren Stand der Technik.

Es ist daher die Aufgabe der vorliegende Erfindung, ein Verfahren zum Facettieren von mindestens einer Werkstückkante wenigstens eines Werkstücks vorzuschlagen, dass eine homogene Facette an der mindestens einen Kante des wenigsten einen Werkstücks erzeugt, ohne dass eine aufwändige CNC-Programmierung notwendig ist. Darüber hinaus soll das Verfahren zuverlässig und kostengünstig mit kurzen Standzeiten arbeiten und mit geringem Personalaufwand durchgeführt werden können. Weiterhin soll das erfindungsgemäße Verfahren eine einfache und sichere Bedienung ermöglichen, so dass das Bedienpersonal auch ohne besondere Vorkenntnisse innerhalb kürzester Zeit das Verfahren durchführen, bzw. die Bedienung der Vorrichtung erlernen kann. Weiterhin soll die Vorrichtung einfach und unkompliziert sein und auf bereits vorhandene Komponenten zurückgreifen können, um ein möglichst kostengünstiges System zur Verfügung zu stellen, welches vielfältig eingesetzt werden kann.

Diese Aufgaben werden erfindungsgemäß durch ein Verfahren mit den Merkmalen des Anspruchs 1 gelöst.

Vorteilhafte Weiterbildungen des Verfahrens werden in den Unteransprüchen angegeben.

Das erfindungsgemäße Verfahren zum Facettieren mindestens einer Werkstückkante auf wenigstens einer Werkstückseite wenigstens eines Werkstücks mittels einer Vorrichtung, umfassend wenigstens eine Werkstückaufnahme, wenigstens eine Messeinrichtung und wenigstens ein angetriebenes Facettierwerkzeug, das relativ zu der Werkstückaufnahme beweglich ist, umfasst wenigstens vier Verfahrensschritte. In einem ersten Verfahrensschritt wird das wenigstens eine Werkstück bereitgestellt, welches typischerweise ein plattenförmiges Blechteil ist, wobei das Verfahren unabhängig von den verwendeten Werkstoffen zur Anwendung kommen kann. Das Werkstück weist bevorzugt eine plattenförmige Geometrie auf, jedoch ist ebenfalls denkbar, dass das Werkstück eine gewölbte Geometrie oder eine beliebige Form aufweist. In einem weiteren Verfahrensschritt wird das wenigstens eine Werkstück auf der Werkstückaufnahme positioniert und fixiert. Anschließend wird in einem dritten Verfahrensschritt die Lage der mindestens einen Werkstückkante relativ zu der Werkstückaufnahme auf wenigstens der ersten Werkstückseite des Werkstückes durch die Messeinrichtung bestimmt, wobei die Messeinrichtung die mindestens eine Werkstückkante auf der wenigstens einen ersten Werkstückseite in dem Maschinenkoordinatensystem der Vorrichtung bzw. im Koordinatensystem der Werkstückaufnahme erfasst. Nach dem Bestimmen der Lage der mindestens einen Werkstückkante auf der wenigstens einen ersten Werkstückseite relativ zu der Werkstückaufnahme wird die mindestens eine Werkstückkante mit dem Facettierwerkzeug abgefahren, wobei während des Abfahrens der mindestens einen Werkstückkante das Facettierwerkzeug in spanabnehmenden Kontakt gebracht wird. Dabei wird die Facette, beispielsweise als eine Kantenverrundung, Fase oder eine andere beliebige Kantengeometrie, angearbeitet.

Erfindungsgemäß ist das Werkstück ein Blech, insbesondere ein plattenförmiges Blech ist, welches durch ein Stanzverfahren, ein Laserschneiden, ein Nibbelverfahren oder ähnliches bereitgestellt wird. Insbesondere Nibbelverfahren bzw. handgeführte Nibbelmaschinen, aber auch Laserschneidverfahren und Stanzverfahren sind hervorragend sowohl zum Ausscheiden der Werkstücke aus dem Ausgangsmaterial in der Einzelteilherstellung als auch bei der Herstellung von Werkstücken in einer Kleinserie geeignet und führen zu geringem Verschnitt und Spanabfallen bei dem Herstellungsprozess.

Das erfindungsgemäße Verfahren sieht weiter vor, dass die Fixierung des Werkstücks auf der Werkstückaufnahme magnetisch und/oder durch Unterdruck erfolgt. Insbesondere die magnetische Fixierung aber auch die Fixierung durch Unterdruck an der Werkstückaufnahme führen zu geringen Spannungen in dem Werkstück und erlauben eine Fixierung des Werkstücks unabhängig von dessen Form, so dass zur Fixierung unterschiedlicher Werkstücke keine Modifikationen an der Werkstückaufnahme vorgenommen werden müssen.

Auch ist es vorteilhaft, wenn die Bestimmung der Lage der mindestens einen Werkstückkante auf der wenigstens einen Werkstückseite auf der Werkstückaufnahme durch ein optisches Messverfahren erfolgt. Insbesondere bevorzugt ist dabei, wenn das optische Messverfahren mittels eines Lasers erfolgt, der als Linienlaser ausgebildet sein kann, durch den sowohl die Lage der mindestens einen Werkstückkante als auch die Höhe der mindestens einen Werkstückkante erfasst werden können. Alternativ kann die Lage der mindestens einen Werkstückkante kamerabasiert erfasst werden, insbesondere mittels einer stereoskopischen Kamera.

Ein weiterer vorteilhafter Aspekt des erfindungsgemäßen Verfahrens sieht vor, dass die Lage der mindestens einen Werkstückkante auf der Werkstückaufnahme durch einen maschinell- oder handgeführten Taster erfolgt. Insbesondere der handgeführte Taster erlaubt ein schnelles und zügiges Einlernen der Vorrichtung, wobei die Vorrichtung durch das Zusammenspiel aus einem Kontakt des Werkstücks und des Tasters und der Position des Tasters die Lage der mindestens einen Werkstückkante erlernt. Die Lage der mindestens einen Werkstückkante auf der wenigstens einen Werkstückseite wird von der Vorrichtung bzw. der Maschinensteuerung gespeichert. Anschließend kann das angetriebene Facettierwerkzeug die Werkstückkante abfahren und die Facette anarbeiten.

Auch ist es vorteilhaft, wenn das Abfahren der mindestens einen Werkstückkante mit dem wenigstens einen angetriebenen Facettierwerkzeug mittels eines maschinengesteuerten Arms oder eines maschinengesteuerten Portals erfolgt. Durch die Messeinrichtung, die als Taster ausgebildet ist, erlernt die Vorrichtung die Lage der mindestens einen Werkstückkante des Werkstückes, und kann die Lage der mindestens einen Werkstückkante dreidimensional abfahren, wodurch Werkstücke mit einer beliebigen dreidimensionalen Geometrie facettiert werden können. Vorteilhaft ist insbesondere, wenn das Facettierwerkzeug an einem dreidimensional bewegbaren Roboter-Arm geführt ist. Derartige Roboter-Arme können eine Vielzahl von unterschiedlichen Werkzeugen oder Messeinrichtungen aufnehmen, diese schnell wechseln und weisen darüber hinaus eine hohe Dynamik auf, wodurch kurze Standzeiten realisierbar sind.

Ein weiterer Aspekt des erfindungsgemäßen Verfahrens sieht vor, dass nach dem Abfahren der mindestens einen Werkzeugkante auf der wenigstens einen ersten Werkstückseite des wenigstens einen Werkstücks mit dem Facettierwerkzeug das wenigstens eine Werkstück manuell oder maschinenbetrieben gewendet wird, um eine zweite Werkstückseite zu facettieren.

Insbesondere ist aber bevorzugt, wenn das Werkstück durch mindestens einen Greifer maschinenbetrieben gewendet wird. Der Greifer kann das Werkstück mit der ersten Werkstückseite in der Werkstückaufnahme erneut positionieren. Die Maschinensteuerung der Vorrichtung kann weiter bevorzugt die Lage der mindestens einen Werkstückkante auf der zweiten Werkstückseite anhand der Bewegung des Greifers berechnen, wodurch ein erneutes Bestimmen der mindestens einen Werkstückkante auf der zweiten Werkstückseite nicht notwendig ist. Insbesondere ist bevorzugt, dass mehrere Greifer zum Wenden des wenigstens einen Werkstücks vorgesehen sind. Auch können Hilfsmittel vorgesehen sein, die ein Umgreifen des wenigstens einen Werkstücks durch ein ein- oder mehrfaches Ablegen des wenigstens einen Werkstücks ermöglichen.

Weiterhin ist es vorteilhaft, wenn das Facettierwerkzeug eine Kantenverrundung oder eine Fase an der mindestens einen Werkstückkante erzeugt. Besonders bevorzugt ist dabei, wenn das Facettierwerkzeug ein Fräs- oder Schleifwerkzeug ist.

Ein weiterer Aspekt, der nicht Teil der Erfindung ist, betrifft eine Vorrichtung zum Facettieren von mindestens einer Werkstücckante wenigstens eines Werkstücks mit einem zuvor beschriebenen Verfahren, wobei die Vorrichtung zum Facettieren wenigstens eine Werkstückaufnahme zum Positionieren und Fixieren des wenigstens einen Werkstücks aufweist, durch welche das Werkstück während der Durchführung des Verfahrens gehalten wird. Darüber hinaus umfasst die Vorrichtung wenigstens eine Messeinrichtung, die eingerichtet ist, die Lage der mindestens einen Werkstückkante des mindestens einen Werkstücks auf dem Werkstückaufnahmebereich zu bestimmen. Durch die wenigstens eine Messeinrichtung kann die Lage der mindestens einen Werkstückkante im Maschinenkoordinatensystem der Vorrichtung erfasst und gespeichert werden.

Unter dem Begriff Werkstückkante sind dabei Werkstückkanten zu verstehen, die nicht notwendigerweise gerade verlaufen müssen, sondern jegliche Kontur aufweisen können. Solche Werkstückkanten können deshalb auch oval, rund, oder in sonstiger Weise gebogen, verlaufen. Das Werkstück kann also jede beliebige Außenkontur aufweisen. Wesentlich ist die Außenkontur mit der Messeinrichtung zu erfassen, beispielsweise abzufahren. Dies kann zum Beispiel durch zueinander beabstandete Messpunkte erfolgen. Die Messpunkte können zum Beispiel im Abstand von 1 mm angeordnet sein. Ergebnis dieses Abfahrens der Außenkontur des Werkstücks ist demnach ein Konturzug des äußeren Umfangs des Werkstücks mit vielen Messstützpunkten, welche mittels Interpolation zu einer kontinuierlichen Linie zusammengefügt werden können. Dabei können zwischen einzelnen Messpunkten gerade Zwischenlinien oder kreisbogenförmige Linien berechnet (vektorisiert) werden, um eine "geglättete" Außenkontur des Werkstücks zu erfassen. Ist die gesamte Außenkontur des Werkstücks so mit der Messeinrichtung erfasst, kann im darauffolgenden Bearbeitungsschritt diese Außenkontur, also äußere Werkstücckante, entgratet werden.

Darüber hinaus umfasst die Vorrichtung wenigstens ein angetriebenes Facettierwerkzeug, das mindestens eine Werkstücckante zur Erzeugung der Facette abfahren kann. Hierzu wird das Facettierwerkzeug durch eine Maschinensteuerung der Vorrichtung anhand der zwei- oder dreidimensional gespeicherten Daten der mindestens einen Werkstückkante maschinenbetrieben zugestellt.

Die wenigstens eine Werkstückaufnahme umfasst eine Magnet-Spanneinrichtung, eine Unterdruck-Spanneinrichtung und/oder ein Kraft-Spanneinrichtung. Besonders bevorzugt ist die Spanneinrichtung eine elektro- und/oder permanentmagnetische Spanneinrichtung und/oder eine Unterdruck-Spanneinrichtung, welche sich durch eine geringe mechanische Werkstückbelastung auszeichnen, und unabhängig von der Geometrie des zu bearbeitenden Werkstücks eingesetzt werden können. Da insbesondere bevorzugt ferromagnetische Bleche in dem vorgeschlagenen Verfahren verarbeitet werden, ist die magnetische Spanneinrichtung zum magnetischen Spannen des Werkstücks besonders bevorzugt. Für nicht magnetische Werkstücke können magnetische Hilfsmittel zum magnetischen Spannen verwendet werden.

Vorteilhaft ist es darüber hinaus, wenn die wenigstens eine Messeinrichtung einen maschinell oder handgeführten Taster umfasst, der die Lage der mindestens einen Werkstückkante des wenigstens einen Werkstücks erfasst. Der Taster kann weiter bevorzugt in Abhängigkeit eines Antastdruckes, durch den ein Kontakt zwischen dem Taster und dem Werkstück erfasst wird, die Lage der Werkstückkante zwei- oder dreidimensional erfassen, wodurch die Lage der mindestens einen Werkstückkante des Werkstücks bzw. die vollständige Form des Werkstücks für die Steuerung der Vorrichtung beschrieben werden kann. Insbesondere das handgeführte Antasten der mindestens einen Werkstücckante ermöglicht ein benutzergesteuertes Anlernen der Vorrichtung.

Eine vorteilhafte Ausgestaltung sieht vor, dass ein maschinenbetriebener Arm oder ein maschinenbetriebenes Portal vorgesehen ist, dass das Facettierwerkzeug aufweist. Der maschinenbetriebene Arm oder das maschinenbetriebene Portal kann nach dem Erfassen der Lage der mindestens einen Werkstückkante die mindestens eine Werkstückkante voll automatisiert abfahren, wobei besonders bevorzugt eine intelligente Steuerungssoftware anhand der zwei- oder dreidimensional gespeicherten Daten der Lage der mindestens einen Werkstückkante einen optimierten Zustellweg abfahren, um die Standzeiten möglichst gering zu halten.

Vorteilhaft ist es, wenn der maschinenbetriebene Arm oder das maschinenbetriebene Portal einen Schwenkkopf aufweist, wobei der Schwenkkopf die Messeinrichtung und/oder das Facettierwerkzeug und/oder wenigstens einen Greifer aufnehmen kann. Zwischen dem Bestimmen der Lage der mindestens einen Werkstückkante des wenigstens einen Werkstücks und dem Abfahren der Werkstückkante mit dem Facettierwerkzeug kann der maschinenbetriebene Arm oder das maschinenbetriebene Portal die Messeinrichtung gegen das Facettierwerkzeug oder den Greifer tauschen, wodurch die Gefahr einer Verschmutzung der Messeinrichtung oder des Greifers reduziert ist. Das wenigstens eine Facettierwerkzeug, die wenigstens eine Messeinrichtung und der wenigstens eine Greifer können in einem entsprechenden Magazin der Vorrichtung abgelegt werden.

Weiterhin ist es vorteilhaft, wenn der maschinenbetriebene Arm oder das maschinenbetriebene Portal einen Schwenkkopf aufweist, wobei der Schwenkkopf die wenigstens eine Messeinrichtung, das wenigstens eine Facettierwerkzeug und/oder den wenigstens einen Greifer umfasst. Nach dem Bestimmen der Lage der mindestens einen Werkstückkante auf der wenigstens einen Werkstückseite des wenigstens einen Werkstücks kann durch ein Umschwenken des Schwenkkopfes das Facettierwerkzeugs in den spanabnehmenden Eingriff zum Erzeugen der Facette an die Werkstückkante geführt werden. Weiterhin kann durch ein weiteres Umschwenken der wenigstens eine Greifer das Werkstück von der Werkstückaufnahme anheben und durch ein Wenden zum rückseitigen Facettieren des Werkstücks das Werkstück erneut auf der Werkstückaufnahme positionieren. Die Maschinensteuerung kann die Lage der wenigstens einen Werkstückkante durch ein Umrechnen der Lage der wenigstens einen Werkstückkante ohne ein weitere Bestimmung durch die Messeinrichtung bestimmen und die Anarbeitung der Facette kann unmittelbar erfolgen.

Auch ist es vorteilhaft, wenn das wenigstens eine Facettierwerkzeug ein Fräswerkzeug ist. Das Fräswerkzeug kann weiterhin bevorzugt eine vordefinierte Facette in Form einer Kantenverrundung, Fase oder einer Ornamentalgeometrie mit beliebiger Form an der mindestens einen Werkstückkante anarbeiten, welche den Anforderungen an eine nach dem Facettieren zu erfolgende Beschichtung gerecht wird.

Nachfolgend werden anhand einer Figur das erfindungsgemäße Verfahren, sowie die nicht erfindungsgemäße Vorrichtung erläutert.

Es zeigt:

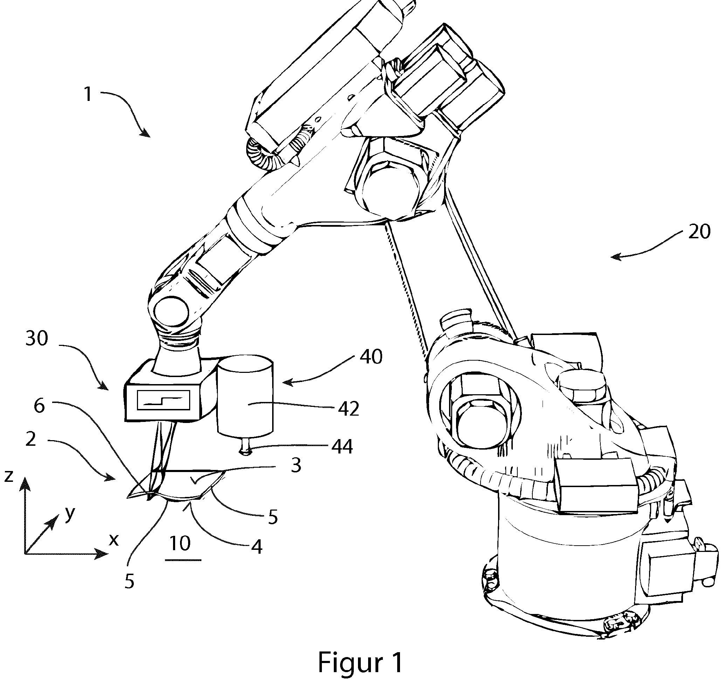

- Figur 1:: einen maschinenbetriebenen Arm mit einem Schenkkopf, wobei der Schwenkkopf eine Messeinrichtung zum Erfassen der mindestens einen Werkstückkante eines Werkstücks auf wenigstens einer Werkstückseite und ein als Fräser ausgebildetes Facettierwerkzeug umfasst.

Figur 1 ist ein exemplarisches Ausführungsbeispiel der Vorrichtung 1 zum Durchführen eines erfindungsgemäßen Verfahrens zum Facettieren mindestens einer Werkstücckante 6 wenigstens eines Werkstücks 2 zu entnehmen. Die Vorrichtung 1 umfasst eine Werkstückaufnahme 10, einen maschinenbetriebenen Arm 20, einen Schwenkkopf 25, eine Messeinrichtung 30, ein Facettierwerkzeug 40 sowie eine (nicht dargestellte) Maschinensteuerung.

Das Werkstück 2 kann eine beliebige Form aufweisen und ist im dargestellten Ausführungsbeispiel ein plattenförmiges Blech mit einer ersten Werkstückseite 3 und einer zweiten Werkstückseite 4 und vier stirnseitigen Werkstückseiten 5, wobei die erste Werkstückseite 3 und die zweite Werkstückseite 4 die zwei gegenüberliegenden Hauptflächen sind. Das dargestellte Werkstück 2 umfasst eine Vielzahl von Werkstückkanten 6, welche jeweils am Übergang zwischen den Werkstückseiten 3, 4, 5 angeordnet sind. Obwohl im dargestellten Ausführungsbeispiel ein rechteckförmiges Werkstück in Form eines plattenförmigen Bleches gezeigt ist, ist das Werkstück 2 auf eine solche Außenkontur natürlich nicht beschränkt. Das Werkstück 2 kann vielmehr jede beliebige Außenkontur haben, z. B. eine runde oder ovale Struktur, sodass die Werkstückkante dann als kreisringförmiger oder ovalringförmiger, umlaufender Ring ausgebildet ist. Weitere beliebige Außenkonturen des Werkstücks 2 sind ebenfalls möglich.

Die Werkstückaufnahme 10 ist als (nicht dargestellter) Maschinentisch 15 ausgebildet und eingerichtet, dass wenigstens eine Werkstück 2 aufzunehmen und zu fixieren. Zum Fixieren des Werkstücks 2 auf der Werkstückaufnahme 10 umfasst die Vorrichtung 1 weiterhin eine Unterdruck-Spanneinrichtung, eine Magnet-Spanneinrichtung oder eine Kraft-Spanneinrichtung. Die Unterdruck-Einrichtung kann über eine Vielzahl von Öffnungen auf der dem Werkstück 2 zugewandten Seite einen Unterdruck aufbringen, der auf das Werkstück 2 wirkt. Die Fixierung des Werkstücks 2 erfolgt auf der Werkstückaufnahme 10 in einer beliebigen Position, wobei diese bevorzugt die durch die Maschinensteuerung betätigt werden kann.

Die Magnet-Spanneinrichtung kann elektromagnetisch und/oder permanentmagnetisch ausgebildet sein und kann durch die Maschinensteuerung gesteuert und geregelt werden. Besonders eignet sich die Magnet-Spanneinrichtung zum Facettieren von ferromagetischen Werkstücken 2, wobei auch nicht-magnetische Werkstücke 2 durch geeignete magnetische Hilfsmittel durch eine solche Magnet-Spanneinrichtung auf der Werkstückaufnahme 10 befestigt werden können.

Der maschinenbetriebenen Arm 20, der wie in Figur 1 dargestellt als Roboterarm mit einer Vielzahl von Drehachsen ausgebildet ist, kann einen Schwenkkopf 25 aufweisen, der durch den maschinenbetriebenen Arm 20 relativ zu der Werkstückaufnahme beliebig bewegt und verschwenkt werden kann. Der maschinenbetriebene Arm 20 kann von der Maschinensteuerung gesteuert und geregelt werden.

Der Schwenkkopf 25 umfasst mindestens eine Werkzeugaufnahme, die die Messeinrichtung 30 und das Facettierwerkzeug 40 aufnehmen kann, und durch eine entsprechende Schwenkbewegung die Messeinrichtung 30 oder das Facettierwerkzeug 40 in eine Eingriffsstellung bringen. Der Schwenkkopf 25 ermöglicht es, dass die Messeinrichtung 30 oder das Facettierwerkzeug 40 zum Werkstück 2 in eine Eingriffsstellung gebracht werden können, um das Werkstück 2 messtechnisch zu erfassen bzw. um das Werkstück 2 mit dem Facettierwerkzeug 40 zu bearbeiten.

Darüber hinaus kann der Schwenkkopf 25 einen (nicht dargestellten) Greifer 50 umfassen, der eingerichtet ist, dass Werkstück 2 anzuheben und zu wenden.

Die Messeinrichtung 30 umfasst bevorzugt einen als Kantendetektor ausgebildeten Linienlaser. Die Messeinrichtung 30 wird zum Erfassen der Lage der wenigstens einen Werkstückkante 6 auf der ersten Werkstückseite 3 durch den maschinenbetriebenen Arm 20 parallel zu der Werkstückaufnahme 10 geführt.

Die Messeinrichtung 30 kann durch das optische Lasermessverfahren punktuell die Lage der Werkstückkante 6 als zweidimensionale Koordinaten (yᵢ, zᵢ) oder dreidimensionale Koordinaten (xᵢ, yᵢ, zᵢ) im Maschinenkoordinatensystem bestimmen und anhand einer Vielzahl von zwei- oder dreidimensionalen Koordinaten (xᵢ, yᵢ, zᵢ) die Lage der Werkstückkante 6 in dem Maschinenkoordinatensystem für die spätere Bearbeitung mit dem Facettierwerkzeug 40 abbilden. Die Berechnung der Lage der mindestens einen Werkstückkante 6 des Werkstücks 2 kann durch die Maschinensteuerung erfolgen. Über eine geeignete Schnittstelle kann beispielsweise ein vektorbasiertes Modell in Form von CAD-Daten oder dergleichen auf einen externen Datenträger exportiert werden. Dabei wird aus der Vielzahl von aufgenommenen Messpunkte ("Punktewolke") vektorisiert ein kontinuierlichen Verlauf der gesamten Werkstückkante 6 ermittelt.

Das Facettierwerkzeug 40 umfasst eine Frässpindel 42 und ein Fräswerkzeug 44, welches beispielsweise als Kegelfräser, Radiusfräser, Doppelradiusfräser usw. ausgebildet sein kann. Die Frässpindel 42 treibt das Fräswerkzeug 44 an, wobei die Frässpindel 42 durch die Maschinensteuerung gesteuert bzw. geregelt wird. Die Form des Facettierwerkzeugs 40 korrespondiert mit der zu erzeugenden Facette.

Der Schwenkkopf 25 kann die Messeinrichtung 30 gegen das Facettierwerkzeug 40 tauschen und in die Eingriffsstellung bringen.

Die Vorrichtung 1 kann ein (nicht dargestelltes) Magazin umfassen, welches eingerichtet ist, die Messeinrichtung 30, unterschiedliche Facettierwerkzeuge 40 oder unterschiedliche Greifer 50 aufzunehmen, um für den Schwenkkopf 25 das jeweilige benötigte Werkzeug bereitzustellen.

Erfindungsgemäß ist bei der Durchführung des Verfahrens vorgesehen, dass zunächst das Werkstück 2 zum Facettieren durch ein Laserschneiden, Stanzen, Nibbeln, Scheiden, Sägen oder ähnlichen zur Verfügung gestellt wird und auf der Werkstückaufnahme 10 mit einer beliebigen Ausrichtung positioniert wird. Anschließend wird das Werkstück 2 durch die Unterdruck-, Magnet-, und/oder Kraft-Spanneinrichtung 17 auf der Werkstückaufnahme 10 fixiert.

Im Anschluss fährt der maschinenbetriebene Arm 20 mit der Messeinrichtung 30 in einem vorgegebenen Muster die Werkstückaufnahme 10 ab und erfasst messtechnische die Lage der mindestens einen Werkstückkante 6. Hierzu werden an mindestens zwei Punkten die Position (x, y, z) dreidimensional im Maschinenkoordinatensystem erfasst, wobei die Lage der Werkstückkante 6 dem Vektor (X, Y, Z) zwischen mindestens zwei benachbarten Positionen (xᵢ, yᵢ, zᵢ) und (xᵢ₊₁, yᵢ₊₁, zᵢ₊₁) entspricht.

Sobald die Lage der mindestens einen Werkstückkante 6 des wenigstens einen Werkstücks 2 bestimmt ist, kann das Werkzeug bzw. die Messeinrichtung 30 an dem angetriebenen Arm 20 gegen das Facettierwerkzeug 40 getauscht werden und in die Eingriffsstellung gebracht werden.

Die Maschinensteuerung berechnet einen Verfahrweg für den Maschinengetriebenen Arm 20 mit dem wenigstens einen Facettierwerkzeug 40 und fährt mit dem Facettierwerkzeug 40 die mindestens eine Werkstückkante 6 des wenigstens einen Werkstücks 2 ab und arbeitet die Facette in das Werkstück 2 mit dem Fräswerkzeug 44 ein.

Nach dem Abfahren der wenigstens einen Werkstückkante 6 mit dem Facettierwerkzeug 40 kann der Schwenkkopf 25 das Facettierwerkzeug 40 gegen den Greifer 50 tauschen und das wenigstens eine Werkstück 2 wenden. Zunächst wird die Fixierung der Spanneinrichtung 16 gelöst und der Greifer 50 kann beispielsweise mittels Unterdruck, elektromagnetisch und/oder permanentmagnetisch oder mechanisch, das Werkstück 2 greifen.

Ein zweiter (nicht dargestellter) Greifer oder eine geeignete (nicht dargestellte) Hilfseinrichtung können weiterhin vorgesehen sein, um das Umgreifen des Werkstücks 2 mit dem Greifer 50 zu erleichtern. Zur Bearbeitung der zweiten Werkstückseite 4 positioniert der Greifer 50 das Werkstück 2 mit seiner ersten Werkstückseite 3 auf der Werkstückaufnahme 10. Anschließend wird das Werkstück 2 auf der Werkstückaufnahme 10 durch die Spanneinrichtung 16 erneut fixiert.

Die Maschinensteuerung kann weiterhin durch eine Transformation der Lage der mindestens einen Werkstückkante 6 auf der ersten Werkstückseite 3 die mindestens eine Werkstückkante 6 auf der zweiten Werkstückseite 4 bestimmen, so dass die mindestens eine Werkstückkante 6 auf der zweiten Werkstückseite 4 - ohne erneut die Lage der wenigstens einen Werkstückkante 6 auf der zweiten Werkstückseite 4 durch die Messeinrichtung 30 zu bestimmen - mit dem Facettierwerkzeug 40 abgefahren werden kann.

### Bezugszeichenliste

- 1: Vorrichtung
- 2: Werkstück
- 3: erste Werkstückseite
- 4: zweite Werkstückseite
- 5: Stirnseite
- 6: Werkstückkante
- 10: Werkstückaufnahme
- 15: Maschinentisch
- 17: Spanneinrichtung
- 20: maschinenbetriebener Arm
- 30: Messeinrichtung
- 40: Facettierwerkzeug
- 42: Frässpindel
- 44: Fräswerkzeug
- 50: Greifer

## Patentansprüche

1. Verfahren zum Facettieren mindestens einer Werkstücckante (6) auf wenigstens einer Werkstückseite (3, 4, 5) wenigstens eines Werkstücks (2) mittels einer Vorrichtung (1), umfassend wenigstens eine Werkstückaufnahme (10), wenigstens eine Messeinrichtung (30) und wenigstens ein angetriebenes Facettierwerkzeug (40), das relativ zu der Werkstückaufnahme (10) beweglich ist und einer Maschinensteuerung, aufweisend nachfolgende Verfahrensschritte:
- Bereitstellen des wenigstens einen Werkstücks (2),
- Positionieren und Fixieren des wenigstens einen Werkstücks (2) auf der Werkstückaufnahme (10),
- Bestimmen der Lage der mindestens einen Werkstücckante (6) relativ zu der Werkstückaufnahme (10) mit der Messeinrichtung (30), und
- Abfahren der wenigstens einen Werkstückkante (6) mit dem wenigstens einen Facettierwerkzeug (40) und Anarbeiten der Facette,
**dadurch gekennzeichnet, dass**
- das Werkstück (2) ein Blech, insbesondere ein plattenförmiges Blech ist, welches durch ein Stanzverfahren, ein Laserschneiden oder ein Nibbelverfahren bereitgestellt wird, und
- dass die Fixierung des Werkstücks (2) auf der Werkstückaufnahme (10) magnetisch und/oder durch Unterdruck erfolgt und die Werkstückaufnahme (10) durch die Maschinensteuerung betätigt wird.

2. Verfahren nach Anspruch 1,
wobei die Bestimmung der Lage der mindestens einen Werkstückkante (6) auf der wenigstens einen Werkstückseite (3, 4, 5) auf der Werkstückaufnahme (10) durch ein optisches Messverfahren mittels der wenigstens einen Messeinrichtung (30) erfolgt.

3. Verfahren nach einem der vorgenannten Ansprüche, wobei die Lage der mindestens einen Werkstückkante (6) auf der wenigstens einen Werkstückseite (3, 4, 5) durch einen maschinell- oder einen handgeführten Taster erfolgt.

4. Verfahren nach einem der vorgenannten Ansprüche, wobei das Abfahren der mindestens einen Werkstückkante (6) mit dem wenigstens einen Facettierwerkzeug (40) mittels eines maschinegesteuerten Arms (20) oder einem maschinegesteuerten Portal erfolgt.

5. Verfahren nach einem der vorgenannten Ansprüche, wobei das Facettierwerkzeug (40) eine Kantenverrundung oder eine Fase an der Werkstückkante (6) erzeugt.

6. Verfahren nach einem der vorgenannten Ansprüche, wobei das Werkstück (2) auf der Werkstückaufnahme (10) maschinell mit mindestens einem Greifer (50) oder manuell gewendet wird.

7. Verfahren nach Anspruch 6,
wobei die Lage der wenigstens einen Werkstückkante (6) auf einer zweiten Werkstückseite (4) nach dem Wenden berechnet wird.

## Claims

1. Method for faceting at least one workpiece edge (6) on at least one workpiece side (3, 4, 5) of at least one workpiece (2) by means of an apparatus (1) comprising at least one workpiece holder (10), at least one measuring device (30) and at least one power faceting tool (40), which is movable relative to the workpiece holder (10), and a machine controller, the method comprising the following method steps:
- delivering the at least one workpiece (2),
- positioning and securing the at least one workpiece (2) on the workpiece holder (10),
- determining the position of the at least one workpiece edge (6) relative to the workpiece holder (10) by means of the measuring device (30), and
- moving the at least one faceting tool (40) along the at least one workpiece edge (6) and producing the facet,
**characterized in that**
- the workpiece (2) is a sheet, in particular a plate-shaped sheet, which is produced by means of a stamping process, a laser cutting process or a nibbling process, and
- **in that** the securing of the workpiece (2) on the workpiece holder (10) is carried out magnetically and/or by means of a partial vacuum and **in that** the workpiece holder (10) is activated by the machine controller.

2. Method in accordance with claim 1,
wherein determining the position of the at least one workpiece edge (6) on the at least one workpiece side (3, 4, 5) on the workpiece holder (10) is carried out by means of an optical measuring method using the at least one measuring device (30).

3. Method in accordance with either of the preceding claims,
wherein the position of the at least one workpiece edge (6) on the at least one workpiece side (3, 4, 5) is carried out using a machine guided or handheld scanner.

4. Method in accordance with any of the preceding claims,
wherein moving the at least one faceting tool (40) along the at least one workpiece edge (6) is carried out by a machine controlled arm (20) or a machine controlled gantry.

5. Method in accordance with any of the preceding claims,
wherein the faceting tool (40) produces an edge fillet or a chamfer on the workpiece edge (6).

6. Method in accordance with any of the preceding claims,
wherein the workpiece (2) is turned mechanically by means of at least one gripper (50) or manually.

7. Method in accordance with claim 6,
wherein the position of the at least one workpiece edge (6) on a second workpiece side (4) after turning is determined.

## Revendications

1. Procédé de facettage d'au moins une arête de pièce (6) d'au moins un côté de pièce (3, 4, 5) d'au moins une pièce (2) avec un dispositif (1) comprenant au moins un récepteur de pièce (10), au moins une installation de mesure (30) et au moins un outil de facettage (40), motorisé, qui est mobile par rapport au support de pièce (10) et une commande de machine comprenant les étapes suivantes consistant à :
- fournir au moins une pièce (2),
- positionner et fixer cette pièce (2) sur le support de pièce (10),
- déterminer la position d'au moins une arête (6) de la pièce par rapport au support de pièce (10) avec l'installation de mesure (30), et
- passer sur cette arête de pièce (6) avec un outil de facettage (40) et travailler la facette,
procédé **caractérisé en ce que**
- la pièce (2) est une tôle notamment une tôle en forme de plaque résultant d'un procédé d'emboutissage, d'une découpe par laser ou d'un procédé de grignotage, et
- la fixation de la pièce (2) sur le support de pièce (10) se fait de manière magnétique et/ou par dépression et le support de pièce (10) est actionné par la commande de machine.

2. Procédé selon la revendication 1,
selon lequel
la détermination de la position d'au moins une arête (6) de la pièce sur au moins un côté (3, 4, 5) de la pièce sur le support de pièce (10) se fait par un procédé de mesure optique avec une installation de mesure (30).

3. Procédé selon l'une des revendications précédentes,
**caractérisé en ce que**
la position d'au moins une arête de pièce (6) sur au moins un côté de pièce (3, 4, 5) se fait par un palpeur commandé par machine ou guidé à la main.

4. Procédé selon l'une des revendications précédentes,
selon lequel
le parcours d'au moins une arête de pièce (6) avec au moins un outil de facettage (40) se fait avec un bras de machine commandé (20) ou d'un portique commandé par machine.

5. Procédé selon l'une des revendications précédentes,
selon lequel
l'outil de facettage (40) réalise un arrondi de l'arête ou une feuillure dans l'arête de la pièce (6).

6. Procédé selon l'une des revendications précédentes,
selon lequel
la pièce (2) est tournée sur le support de pièce (10) par machine avec une pince (50) ou manuellement.

7. Procédé selon la revendication 6,
selon lequel
on calcule la position de cette arête de pièce (6) sur un second côté (4) de la pièce après l'avoir retournée.
